# EUROPÄISCHE PATENTSCHRIFT

(11) **EP 1 015 975 B1**
(45) Veröffentlichungstag und Bekanntmachung des Hinweises auf die Patenterteilung: **11.12.2002**
(21) Anmeldenummer: 98954125.5
(22) Anmeldetag: 07.09.1998
(51) Int. Cl.: G06F 11/00

(54) **VERFAHREN UND VORRICHTUNG ZUR ÜBERWACHUNG DER ORDNUNGSGEMÄSSEN AUSFÜHRUNG EINES AUTOMATISCH ABLAUFENDEN VORGANGES**
METHOD AND DEVICE FOR MONITORING AN AUTOMATIC PROCESS TO ENSURE THAT IT IS EXECUTED CORRECTLY
PROCEDE ET DISPOSITIF POUR SURVEILLER LA BONNE EXECUTION D'UN PROCESSUS SE DEROULANT AUTOMATIQUEMENT

(30) Priorität: 18.09.1997 DE 19741168
(43) Veröffentlichungstag der Anmeldung: 05.07.2000
(73) Patentinhaber: Infineon Technologies AG, 81669 München (DE)
(72) Erfinder: KASPRICK, Kai, D-81541 München (DE); KOCK, Ernst-Josef, D-85614 Kirchseeon (DE)
(74) Vertreter: Jannig, Peter, Dipl.-Ing.
(86) Internationale Anmeldenummer: DE9802626
(87) Internationale Veröffentlichungsnummer: WO99014672

(56) Entgegenhaltungen:
- US-A- 3 899 665
- PATENT ABSTRACTS OF JAPAN vol. 010, no. 045 (P-430), 21. Februar 1986 & JP 60 191340 A (TOSHIBA KK), 28. September 1985
- B.E. BALDWIN, F.D. SCHOEPS: "Sequential Control System" IBM TECHNICAL DISCLOSURE BULLETIN, Bd. 16, Nr. 12, Mai 1974, Seiten 3873-3875, XP002097525 Armonk, NY, USA

## Beschreibung

Die vorliegende Erfindung betrifft ein Verfahren gemäß dem Oberbegriff der Patentansprüche 1-3 und eine Vorrichtung gemäß dem Oberbegriff der Patentansprüche 9-11, d.h. ein Verfahren und eine Vorrichtung zur Überwachung der ordnungsgemäßen Ausführung eines automatisch ablaufenden Vorganges.

Die ordnungsgemäße Ausführung von automatisch ablaufenden Vorgängen jeder Art ist verständlicherweise das angestrebte Ziel einer jeden Entwicklung auf diesem Gebiet. Dies gilt in besonderem Maße für integrierte Schaltungen, denn dort können kleinste Fehler verheerende Auswirkungen haben.

Die Bemühungen, automatisch ablaufende technische Vorgänge ordnungsgemäß ablaufen zu lassen, zeigen zunehmend Erfolg: Fehler treten immer seltener auf. Die Erfahrung zeigt jedoch, daß es noch nicht gelungen ist,solche Vorgänge unter allen Umständen völlig fehlerfrei ablaufen zu lassen. Es bedarf daher geeigneter Verfahren und Vorrichtungen, durch welche gegebenenfalls auftretende Fehler wenigstens erkennbar sind.

Der vorliegenden Erfindung liegt daher die Aufgabe zugrunde das Verfahren gemäß dem Oberbegriff der Patentansprüche 1-3 und die Vorrichtung gemäß dem Oberbegriff der Patentansprüche 9-11 derart weiterzubilden, daß gegebenenfalls auftretende Fehler bei der Ausführung automatisch ablaufender Vorgänge auf einfache Weise zuverlässig erkennbar sind.

Diese Aufgabe wird erfindungsgemäß durch die im kennzeichnenden Teil der Patentansprüche 1-3 (Verfahren) bzw. die im kennzeichnenden Teil der Patentansprüche 9-11 (Vorrichtung) beanspruchten Merkmale gelöst.

Demnach ist vorgesehen,
- daß zu Beginn des zu überwachenden Vorganges ein oder mehrere Fehler signalisierende Fehlersignale erzeugt werden, und daß die Erzeugung der jeweiligen Fehlersignale beendet wird, wenn der Fehler, der durch das betreffende Fehlersignal signalisiert werden soll, nicht aufgetreten ist bzw.
- daß eine Fehlersignal-Erzeugungseinrichtung vorgesehen ist, welche dazu ausgelegt ist, zu Beginn des zu überwachenden Vorganges ein oder mehrere Fehler signalisierende Fehlersignale zu erzeugen, und die Erzeugung der jeweiligen Fehlersignale zu beenden, wenn der Fehler, der durch das betreffende Fehlersignal signalisiert werden soll, nicht aufgetreten ist.

Da die einen Fehler signalisierenden Fehlersignale aktiv zurückgesetzt werden müssen, um den ordnungsgemäßen Ablauf oder Fortschritt des zu überwachenden Vorganges zu signalisieren, ist es äußerst unwahrscheinlich, daß ein aufgetretener Fehler nicht signalisiert wird; gegebenenfalls vorhandene Fehler in den die Fehlersignale erzeugenden Fehlersignal-Erzeugungseinrichtungen sind insbesondere zu Beginn des zu überwachenden Vorganges schnell und einfach erkennbar (zu diesem Zeitpunkt müssen alle Fehlersignale Fehler signalisieren).

Die Signalisierung von gegebenenfalls auftretenden Fehlern ist daher in höchstem Maß zuverlässig.

Bei Vorsehen mehrerer, verschiedenen Stufen des zu überwachenden Vorganges zugeordneten Fehlersignalen können gegebenenfalls auftretende Fehler sogar nach Art und Umfang spezifiziert werden, wodurch bei Bedarf gezielt Maßnahmen ergreifbar sind, um den aufgetretenen Fehler zu beseitigen oder wirkungsmäßig zu eliminieren. Dies gilt in besonderem Maße, wenn die Fehlersignale bei ordnungsgemäßer Ausführung des zu überwachenden Vorganges in einer bestimmten Reihenfolge und/oder in bestimmten zeitlichen Abständen zurückgesetzt werden müssen. Unabhängig davon lassen sich gegebenenfalls auftretende Fehler auch schon während des zu überwachenden Vorganges erkennen.

Vorteilhafte Weiterbildungen der Erfindung sind Gegenstand der Unteransprüche.

Das Dokument JP-A-60 19 1340) offenbart einen Prozeß, der nach Abarbeitung bestimmter Stufen des Prozesses Steuersignale an Schaltelemente ausgibt, welche ein gemeinsames Fehlersignal erzeugen.

Die Erfindung wird nachfolgend anhand von Ausführungsbeispielen unter Bezugnahme auf die Zeichnung näher beschrieben. Es zeigen
- Figur 1: den prinzipiellen Aufbau einer Anordnung zur Überwachung der ordnungsgemäßen Ausführung eines automatisch ablaufenden Vorganges,
- Figur 2: den Aufbau einer Alternative zu der in der Anordnung gemäß Figur 1 enthaltenen Fehlersignal-Erzeugungseinrichtung, und
- Figur 3: den Aufbau einer weiteren Alternative zu der in der Anordnung gemäß Figur 1 enthaltenen Fehlersignal-Erzeugungseinrichtung.

Der Vorgang, dessen Überwachung nachfolgend näher beschrieben wird, ist der Programmier- und/oder Löschvorgang bei einem in einem Microcontroller integrierten Flash-EPROM. Solche sogenannten embedded flash memories bzw. Flash-Module finden insbesondere wegen der flexiblen und vielfältigen Einsatzmöglichkeiten derselben zunehmend Verbreitung. Das Programmieren und Löschen solcher Speicher erfolgt weitgehend unabhängig von der ansteuernden Einheit (dem Steuerteil des Microcontrollers). Es genügt, wenn das Programmieren oder Löschen über eine entsprechend ausgebildete Schnittstelle angestoßen wird. Der Programmier- oder Löschvorgang wird auf einen solchen externen Anstoß hin durch das Flash-Modul selbst, genauer gesagt eine Flash-Modul-Steuereinheit desselben gesteuert.

Es sei bereits an dieser Stelle darauf hingewiesen, daß der Flash-Speicher, dessen Programmieren und/oder Löschen überwacht werden soll, nicht zwangsläufig Bestandteil eines Mikrocontrollers oder dergleichen sein muß; es kann sich auch um einen anderswo untergebrachten oder separaten Flash-Speicher handeln.

Durch die beschriebene Überwachung des Programmierens und Löschens des Flash-Speichers sind sowohl Fehler in der Flash-Modul-Steuereinheit als auch Fehler in der das Flash-Modul ansteuernden Einheit (dem Steuerteil des Mikrocontrollers, einer CPU oder dergleichen) erfaßbar. Fehler in der das Flash-Modul ansteuernden Einheit sind beispielsweise ein Rücksetzen der Flash-Modul-Steuereinheit während des Programmier- und/oder Löschvorganges.

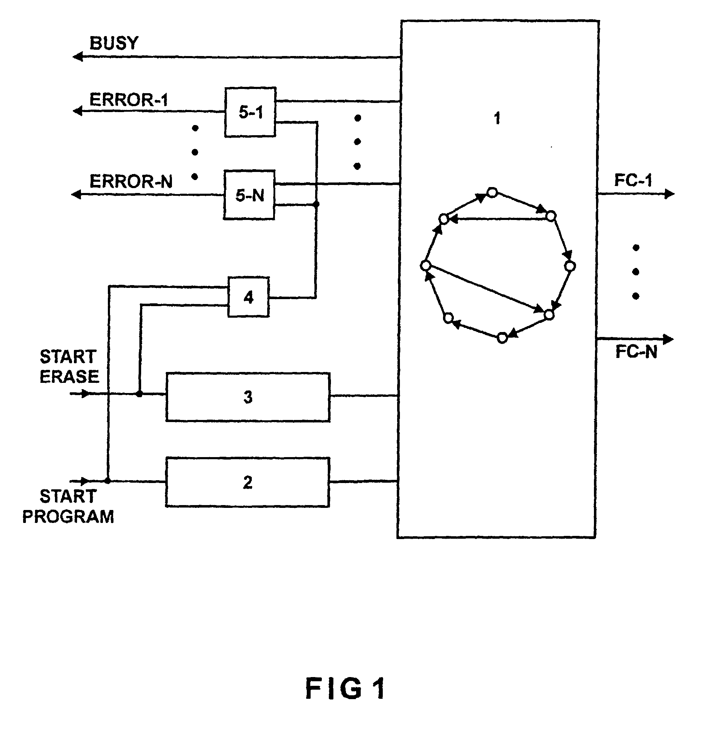

Ein möglicher Aufbau einer Anordnung zur Überwachung des Programmier- und/oder Löschvorganges ist in Figur 1 veranschaulicht.

Die Anordnung gemäß Figur 1 umfaßt eine Flash-Modul-Steuereinheit 1, erste und zweite Synchronisationseinheiten 2 und 3, ein ODER-Glied 4 und N (bistabile) Flip-Flops 5-1 bis 5-N, wobei diese Einheiten wie in der Figur 1 verschaltet sind.

Die Anordnung gemäß Figur 1 ist zur Eingabe eines Löschstartsignals START ERASE und eines Programmierstartsignals START PROGRAM und zur Ausgabe von Flash-Speicher-Steuersignalen FC-1 bis FC-N, Fehlersignalen ERROR-1 bis ERROR-N, und eines Quittungssignals BUSY ausgelegt.

Das Starten eines Programmier- oder Löschvorganges erfolgt im Ansprechen auf die Eingabe des Programmierstartsignals START PROGRAM bzw. des Löschstartsignals START ERASE, welche im betrachteten Beispiel durch einen Impuls auf der Programmierstart- oder Löschstartleitung realisiert sein mögen. Dieser, von der das Flash-Modul ansteuernden Steuereinheit bei Bedarf ausgegebene Impuls wird durch die zugeordnete Synchronisationseinheit 2 bzw. 3 auf den internen Takt der Flash-Modul-Steuereinheit 1 synchronisiert an diese weitergegeben und löst dort den Start eines Programmier- bzw. Löschvorganges aus. Der Startimpuls auf der Programmierstart- oder Löschstartleitung wird ferner über das ODER-Gatter 4 den Flip-Flops 5-1 bis 5-N zugeführt und bewirkt, daß diese in einen Zustand versetzt werden, in welchem die die Fehlersignale ERROR-1 bis ERROR-N repräsentierenden Ausgangssignale derselben einen Fehler signalisieren. Wie später noch genauer beschrieben werden wird, können die Fehlersignale ERROR-1 bis ERROR-N durch die Flip-Flops 5-1 bis 5-N auch wieder zurückgesetzt werden; die Flip-Flops 5-1 bis 5-N wirken daher als Fehlersignal-Erzeugungseinrichtung.

Die Flash-Modul-Steuereinheit 1 gibt auf den Empfang des Programmierstart- oder Löschstartsignals das Quittungssignal BUSY aus und signalisiert auf diese Weise nach außen hin, daß gerade ein Programmier- oder Löschvorgang stattfindet.

Die Flash-Modul-Steuereinheit 1 verhält sich wie eine sogenannte state machine. D.h., sie durchläuft ausgehend von einem Grundzustand in einer bestimmten Reihenfolge bestimmte weitere Zustände, um am Ende schließlich wieder zum Grundzustand zurückzukehren. Die einzelnen Zustände entsprechen verschiedenen Stufen des Programmier- oder Löschvorganges.

Den einzelnen Zuständen bzw. ausgewählten Zuständen sind die Fehlersignale ERROR-1 bis ERROR-N zugeordnet. Diese zu Beginn des Programmier- oder Löschvorganges gesetzten Fehlersignale werden zurückgesetzt, wenn die betreffenden Stufen fehlerfrei ausgeführt werden. Die Flash-Modul-Steuereinheit 1 ist hierzu mit den als Fehlersignal-Erzeugungseinrichtungen wirkenden Flip-Flops 5-1 bis 5-N verbunden. Das erste Flip-Flop 5-1 und damit auch das von diesem ausgegebene Fehlersignal ERROR-1 wird zurückgesetzt, wenn die zugeordnete erste Stufe des Programmier- oder Löschvorganges fehlerfrei ausgeführt wurde, ein zweites Flip-Flop und damit auch ein von diesem erzeugtes zweites Fehlersignal wird zurückgesetzt, wenn die zugeordnete zweite Stufe des Programmier- oder Löschvorganges fehlerfrei ausgeführt wurde, und das n-te Flip-Flop 5-N und damit auch das von diesem erzeugte Fehlersignal ERROR-N wird zurückgesetzt, wenn die zugeordnete n-te Stufe des Programmieroder Löschvorganges fehlerfrei ausgeführt wurde.

Wenn der gesamte Programmier- oder Löschvorgang ordnungsgemäß bis zum Ende durchgeführt wurde, sind alle Fehlersignale ERROR-1 bis ERROR-N zurückgesetzt. Dadurch, daß alle Fehlersignale zurückgesetzt sind, wird signalisiert, daß der Programmier- oder Löschvorgang ordnungsgemäß durchgeführt wurde.

Was als "fehlerfreie" oder "ordnungsgemäße" Durchführung einzustufen ist, kann abhängig von den individuellen Eigenheiten des zu überwachenden Vorganges unterschiedlich festgelegt werden. Die Einstufung als fehlerfrei bzw. ordnungsgemäß kann in bestimmten Fällen bereits erfolgen, wenn die betreffende Stufe des zu überwachenden Vorganges erreicht wurde; sie kann aber auch erst erfolgen, wenn die betreffende Stufe bis zu einem bestimmten Punkt durchlaufen wurde und/oder wenn bei der Ausführung der Stufe bestimmte Bedingungen erfüllt werden. Dementsprechend unterscheiden sich oder variieren auch die Zeitpunkte, zu denen die Fehlersignal-Erzeugungseinrichtung (die Flip-Flops 5-1 bis 5-N) zum Rücksetzen der Fehlersignale ERROR-1 bis ERROR-N veranlaßt werden.

Sofern beim Löschen und/oder Programmieren nicht alle Stufen durchlaufen werden, für die Fehlersignale erzeugbar sind, müssen die Fehlersignale für diejenigen Stufen, welche bei dem zu überwachenden Vorgang nicht zu durchlaufen sind, bei der Auswertung der Fehlersignale unberücksichtigt bleiben.

Alternativ kann vorgesehen werden, daß zu Beginn des zu überwachenden Vorganges selektiv nur diejenigen Fehlersignale gesetzt werden, welche den nachfolgend zu durchlaufenden Stufen zugeordnet sind.

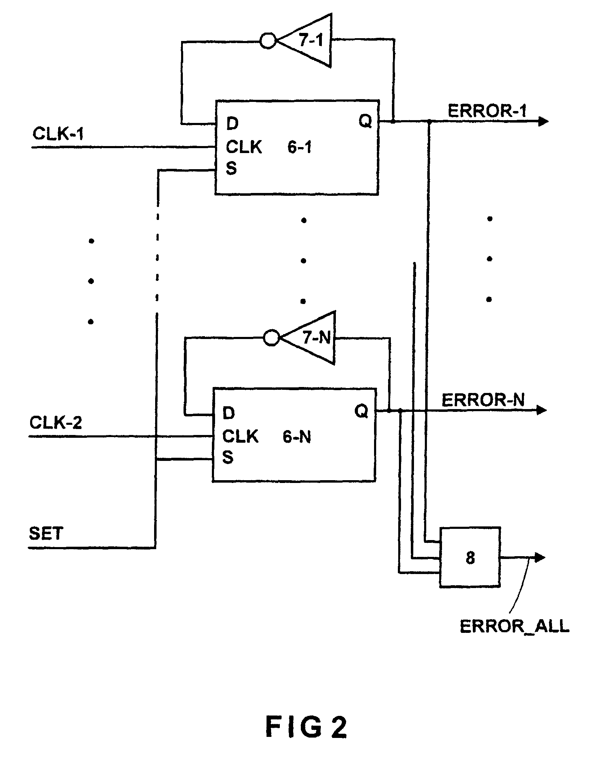

Die Flip-Flops 5-1 bis 5-N sind in der Anordnung gemäß Figur 1 als RS-Flip-Flops realisiert. Es können jedoch auch Master-Slave-Flip-Flops verwendet werden. Ein praktisches Beispiel einer aus Master-Slave-Flip-Flops aufgebauten Fehlersignal-Erzeugungseinrichtung ist in Figur 2 gezeigt.

Die Master-Slave-Flip-Flops sind in der Figur 2 mit den Bezugszeichen 6-1 bis 6-N bezeichnet. Die Flip-Flops 6-1 bis 6-N wirken wie die Flip-Flops 5-1 bis 5-N als Fehlersignal-Erzeugungseinrichtung; ihre Ausgangssignale repräsentieren wiederum die Fehlersignale ERROR-1 bis ERROR-N.

Die Flip-Flops 6-1 bis 6-N werden durch ein gemeinsames Setzsignal SET, welches das Programmierstart- oder Löschstartsignal sein kann und an die jeweiligen S-Eingänge der Flip-Flops 6-1 bis 6-N angelegt wird, gesetzt; das am Ausgangsanschluß Q der Flip-Flops 6-1 bis 6-N ausgegebene Ausgangssignal wird dadurch zu "1" und signalisiert so einen Fehler in der zugeordneten Stufe des zu überwachenden Vorganges.

Sobald die Stufe des zu überwachenden Vorganges, welchem ein jeweiliges Flip-Flop zugeordnet ist, als fehlerfrei bzw. ordnungsgemäß ausgeführt einzustufen ist, wird von der Flash-Modul-Steuereinheit 1 ein diesen Umstand signalisierendes Signal erzeugt und an den Taktsignaleingang CLK des zugeordneten Flip-Flop angelegt. Solange ein jeweiliges Flip-Flop ein solches Taktsignal erhält, kann sein Schaltzustand über seinen D-Eingang verändert werden. In den D-Eingang werden die durch Inverter 7-1 bis 7-N invertierten Ausgangssignale ERROR-1 bis ERROR-N der jeweiligen Flip-Flops 6-1 bis 6-N angelegt.

Nach dem anfänglichen Setzen der Flip-Flops 6-1 bis 6-N weisen die Fehlersignale ERROR-1 bis ERROR-N den Wert "1" auf, wodurch an den D-Eingängen Signale mit dem Wert "0" anliegen. Erreicht der zu überwachende Vorgang die Stufe, welcher ein betreffendes Flip-Flop zugeordnet ist, so wird dieses Flip-Flop bei ordnungsgemäßer Ausführung der betreffenden Stufe durch das in den CLK-Eingang eingegebene Taktsignal CLK-1 ... CLK-N in Schaltbereitschaft versetzt und schaltet, da am D-Eingang ein Signal "0" anliegt, den Ausgang von "1" auf "0" um, wodurch nach außen hin signalisiert wird, daß in der zugeordneten Stufe alles ordnungsgemäß abläuft. Durch das Umschalten des Fehlersignals von "1" auf "0" kommt am D-Eingang ein Signal "1" zu liegen, welches jedoch kein erneutes Umschalten des betreffenden Flip-Flop bewirkt.

Die Fehlersignale ERROR-1 bis ERROR-N aller Flip-Flops 6-1 bis 6-N können in ein eine logische ODER-Verknüpfung ausführendes ODER-Glied 8 eingegeben werden, welches ein gemeinsames Fehlersignal ERROR-ALL ausgibt. Das Fehlersignal ERROR-ALL hat den Wert "1", wenn eines oder mehrere der Fehlersignale ERROR-1 bis ERROR-N nicht zurückgesetzt wurden, also in einer oder mehreren Stufen des zu überwachenden Vorganges Fehler auftraten. Sofern es interessiert, in welcher oder welchen Stufen der oder die Fehler aufgetreten sind, können bzw. müssen zusätzlich oder alternativ die einzelnen Fehlersignale ERROR-1 bis ERROR-N ausgewertet werden. Eine wie beschrieben oder ähnlich erfolgende Zusammenfassung der einzelnen Fehlersignale ERROR-1 bis ERROR-N zu einem gemeinsamen Fehlersignal ERROR-ALL kann auch bei anders aufgebauten Fehlersignal-Erzeugungseinrichtungen (unter anderem auch bei der Fehlersignal-Erzeugungseinrichtung gemäß Figur 1) angewandt werden.

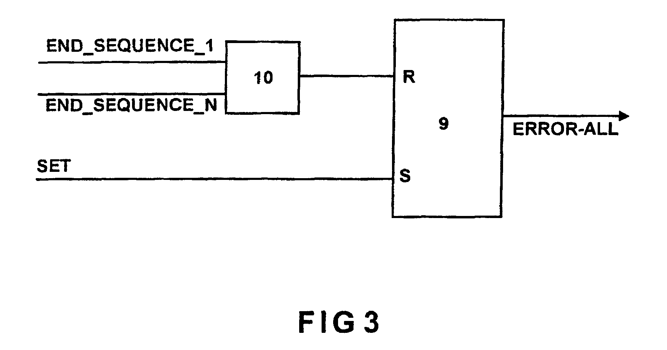

Die vielen Flip-Flops 5-1 bis 5-N bzw. 6-1 bis 6-N, deren Anzahl der Anzahl der zu überwachenden Stufen des zu überwachenden Vorganges entspricht, können unter Umständen durch ein einziges Flip-Flop ersetzt werden. Ein Ausführungsbeispiel einer mit einem einzigen Flip-Flop auskommenden Fehlersignal-Erzeugungseinrichtung ist in Figur 3 veranschaulicht.

Dieses eine Flip-Flop ist ein mit dem Bezugszeichen 9 bezeichnetes RS-Flip-Flop. Das Flip-Flop 9 wird wie auch die Flip-Flops 5-1 bis 5-N gemäß Figur 1 und die Flip-Flops 6-1 bis 6-N gemäß Figur 2 vor dem Beginn des zu überwachenden Vorganges durch ein Setzsignal SET, welches beispielsweise das Programmierstart- oder Löschstartsignal PROGRAM START bzw. ERASE START sein kann, gesetzt. Wenn und so lange das Flip-Flop 9 gesetzt ist, signalisiert es über ein Ausgangs- bzw. Fehlersignal ERROR-ALL nach außen hin einen Fehler in dem zu überwachenden Vorgang. Das Flip-Flop 9 wird zurückgesetzt, wenn alle Stufen des zu überwachenden Vorganges bis zum Ende durchlaufen wurden. Die Flash-Modul-Steuereinheit 1 gibt hierzu (Stufenende-)Signale END_SEQUENCE_1 bis END_SEQUENCE_N aus, welche jeweils signalisieren, daß die betreffenden Stufen 1 bis N bis zum Ende durchlaufen wurden. Die Signale END_SEQUENCE_1 bis END_SEQUENCE_N werden in ein UND-Glied 10 eingegeben, dessen Ausgangssignal zugleich das Rücksetzsignal für das Flip-Flop 9 ist. Das UND-Glied 10 bewirkt, daß das Flip-Flop 9 nur dann zurückgesetzt werden kann, wenn sämtliche Stufen des zu überwachenden Vorganges bis zum Ende durchlaufen wurden. Eine derartige oder ähnliche Zusammenfassung oder Verknüpfung der das Rücksetzen der Fehlersignale veranlassenden Signale kann auch bei den Anordnungen gemäß den Figuren 1 und 2 und sonstigen Anordnungen zum Einsatz kommen.

Es dürfte einleuchten, daß die vorstehend beschriebenen Flip-Flop-Anordnungen bei weitem nicht die einzigen Möglichkeiten darstellen, um eine wie vorstehend beschrieben erfolgende Überwachung eines automatisch ablaufenden Vorganges durchzuführen. Bei den beschriebenen Anordnungen handelt es sich nur um einzelne Beispiele zur Veranschaulichung des grundsätzlichen Prinzips; es handelt sich keineswegs um eine erschöpfende Aufzählung aller gleichwertigen oder vergleichbaren Alternativen.

Obgleich die beschriebenen Ausführungsbeispiele jeweils dazu ausgelegt sind, das Programmieren und/oder Löschen eines Flash-Speichers zu überwachen, ist die Anwendung des grundlegenden Überwachungsprinzips hierauf nicht beschränkt; es (das grundlegende Überwachungsprinzip) ist auch zur Überwachung beliebiger anderer automatisch ablaufender Vorgänge verwendbar.

## Patentansprüche

1. Verfahren zur Überwachung der ordnungsgemäßen Ausführung eines automatisch ablaufenden Vorganges,
**dadurch gekennzeichnet,**
- **daß** zu Beginn des zu überwachenden Vorganges ein oder mehrere Fehlersignale (ERROR-1 bis ERROR-N, ERROR-ALL) erzeugt werden, von welchen jedes einer oder mehreren Stufen des zu überwachenden Vorganges zugeordnet ist, und von welchen jedes das Auftreten eines Fehlers in der zugeordneten Stufe oder in den zugeordneten Stufen signalisiert, und
- **daß** die Erzeugung eines jeweiligen Fehlersignals beendet wird, wenn der Fehler, der durch das betreffende Fehlersignal signalisiert wird, nicht aufgetreten ist, wobei davon ausgegangen wird, daß der Fehler, dessen Vorhandensein durch das betreffende Fehlersignal signalisiert wird, nicht aufgetreten ist, wenn mit der Ausführung der dem betreffenden Fehlersignal zugeordneten Stufe des zu überwachenden Vorganges begonnen wurde.

2. Verfahren zur Überwachung der ordnungsgemäßen Ausführung eines automatisch ablaufenden Vorganges,
**dadurch gekennzeichnet,**
- **daß** zu Beginn des zu überwachenden Vorganges ein oder mehrere Fehlersignale (ERROR-1 bis ERROR-N, ERROR-ALL) erzeugt werden, von welchen jedes einer oder mehreren Stufen des zu überwachenden Vorganges zugeordnet ist, und von welchen jedes das Auftreten eines Fehlers in der zugeordneten Stufe oder in den zugeordneten Stufen signalisiert, und
- **daß** die Erzeugung eines jeweiligen Fehlersignals beendet wird, wenn der Fehler, der durch das betreffende Fehlersignal signalisiert wird, nicht aufgetreten ist, wobei davon ausgegangen wird, daß der Fehler, dessen Vorhandensein durch das betreffende Fehlersignal signalisiert wird, nicht aufgetreten ist, wenn die dem betreffenden Fehlersignal zugeordnete Stufe des zu überwachenden Vorganges bis zu einem bestimmten Punkt durchlaufen wurde.

3. Verfahren zur Überwachung der ordnungsgemäßen Ausführung eines automatisch ablaufenden Vorganges,
**dadurch gekennzeichnet,**
- **daß** zu Beginn des zu überwachenden Vorganges ein oder mehrere Fehlersignale (ERROR-1 bis ERROR-N, ERROR-ALL) erzeugt werden, von welchen jedes einer oder mehreren Stufen des zu überwachenden Vorganges zugeordnet ist, und von welchen jedes das Auftreten eines Fehlers in der zugeordneten Stufe oder in den zugeordneten Stufen signalisiert, und
- **daß** die Erzeugung eines jeweiligen Fehlersignals beendet wird, wenn der Fehler, der durch das betreffende Fehlersignal signalisiert wird, nicht aufgetreten ist, wobei davon ausgegangen wird, daß der Fehler, dessen Vorhandensein durch das betreffende Fehlersignal signalisiert wird, nicht aufgetreten ist, wenn bei der Ausführung der dem betreffenden Fehlersignal zugeordneten Stufe des zu überwachenden Vorganges bestimmte Bedingungen erfüllt werden.

4. Verfahren nach einem der vorhergehenden Ansprüche,
**dadurch gekennzeichnet,**
**daß** die Fehlersignal-Erzeugungseinrichtung (5-1 bis 5-N; 6-1 bis 6-N; 9), durch welche die Fehlersignale (ERROR-1 bis ERROR-N, ERROR-ALL) erzeugt werden, zur Erzeugung der Fehlersignale durch ein Signal (START PROGRAM, START ERASE) veranlaßt werden, im Ansprechen auf welches auch der zu überwachende Vorgang gestartet wird.

5. Verfahren nach einem der vorhergehenden Ansprüche,
**dadurch gekennzeichnet,**
**daß** die Fehlersignal-Erzeugungseinrichtung (5-1 bis 5-N; 6-1 bis 6-N; 9), durch welche die Fehlersignale (ERROR-1 bis ERROR-N, ERROR-ALL) erzeugt werden, durch Steuersignale, die von einer den zu überwachenden Vorgang steuernden Steuereinrichtung (1) ausgegeben werden, zur Beendigung der Erzeugung der Fehlersignale veranlaßt werden.

6. Verfahren nach Anspruch 5,
**dadurch gekennzeichnet,**
**daß** die Steuersignale vor deren Verwendung zur Ansteuerung der Fehlersignal-Erzeugungseinrichtung (5-1 bis 5-N; 6-1 bis 6-N; 9) einer UND-Verknüpfung unterworfen werden.

7. Verfahren nach einem der vorhergehenden Ansprüche,
**dadurch gekennzeichnet,**
**daß** mehrere oder alle Fehlersignale einer ODER-Verknüpfung unterzogen und dadurch zu einem für mehrere oder alle Stufen des zu überwachenden Vorganges gemeinsamen Fehlersignal (ERROR-ALL) zusammengefaßt werden.

8. Verfahren nach einem der vorhergehenden Ansprüche,
**dadurch gekennzeichnet,**
**daß** der zu überwachende Vorgang das Programmieren und/oder Löschen eines Flash-Speichers ist.

9. Vorrichtung zur Überwachung der ordnungsgemäßen Ausführung eines automatisch ablaufenden Vorganges,
**dadurch gekennzeichnet,**
**daß** eine Fehlersignal-Erzeugungseinrichtung (5-1 bis 5-N; 6-1 bis 6-N; 9) vorgesehen ist, welche dazu ausgelegt ist,
- zu Beginn des zu überwachenden Vorganges ein oder mehrere Fehlersignale (ERROR-1 bis ERROR-N, ERROR-ALL) zu erzeugen, von welchen jedes einer oder mehreren Stufen des zu überwachenden Vorganges zugeordnet ist, und von welchen jedes das Auftreten eines Fehlers in der zugeordneten Stufe oder in den zugeordneten Stufen signalisiert, und
- die Erzeugung eines jeweiligen Fehlersignals zu beenden, wenn der Fehler, der durch das betreffende Fehlersignal signalisiert wird, nicht aufgetreten ist, wobei davon ausgegangen wird, daß der Fehler, dessen Vorhandensein durch das betreffende Fehlersignal signalisiert wird, nicht aufgetreten ist, wenn mit der Ausführung der dem betreffenden Fehlersignal zugeordneten Stufe des zu überwachenden Vorganges begonnen wurde.

10. Vorrichtung zur Überwachung der ordnungsgemäßen Ausführung eines automatisch ablaufenden Vorganges,
**dadurch gekennzeichnet,**
**daß** eine Fehlersignal-Erzeugungseinrichtung (5-1 bis 5-N; 6-1 bis 6-N; 9) vorgesehen ist, welche dazu ausgelegt ist,
- zu Beginn des zu überwachenden Vorganges ein oder mehrere Fehlersignale (ERROR-1 bis ERROR-N, ERROR-ALL) zu erzeugen, von welchen jedes einer oder mehreren Stufen des zu überwachenden Vorganges zugeordnet ist, und von welchen jedes das Auftreten eines Fehlers in der zugeordneten Stufe oder in den zugeordneten Stufen signalisiert, und
- die Erzeugung eines jeweiligen Fehlersignals zu beenden, wenn der Fehler, der durch das betreffende Fehlersignal signalisiert wird, nicht aufgetreten ist, wobei davon ausgegangen wird, daß der Fehler, dessen Vorhandensein durch das betreffende Fehlersignal signalisiert wird, nicht aufgetreten ist, wenn die dem betreffenden Fehlersignal zugeordnete Stufe des zu überwachenden Vorganges bis zu einem bestimmten Punkt durchlaufen wurde.

11. Vorrichtung zur Überwachung der ordnungsgemäßen Ausführung eines automatisch ablaufenden Vorganges,
**dadurch gekennzeichnet,**
**daß** eine Fehlersignal-Erzeugungseinrichtung (5-1 bis 5-N; 6-1 bis 6-N; 9) vorgesehen ist, welche dazu ausgelegt ist,
- zu Beginn des zu überwachenden Vorganges ein oder mehrere Fehlersignale (ERROR-1 bis ERROR-N, ERROR-ALL) zu erzeugen, von welchen jedes einer oder mehreren Stufen des zu überwachenden Vorganges zugeordnet ist, und von welchen jedes das Auftreten eines Fehlers in der zugeordneten Stufe oder in den zugeordneten Stufen signalisiert, und
- die Erzeugung eines jeweiligen Fehlersignals zu beenden, wenn der Fehler, der durch das betreffende Fehlersignal signalisiert wird, nicht aufgetreten ist, wobei davon ausgegangen wird, daß der Fehler, dessen Vorhandensein durch das betreffende Fehlersignal signalisiert wird, nicht aufgetreten ist, wenn bei der Ausführung der dem betreffenden Fehlersignal zugeordneten Stufe des zu überwachenden Vorganges bestimmte Bedingungen erfüllt werden.

12. Vorrichtung nach einem der Ansprüche 9 bis 11,
**dadurch gekennzeichnet,**
**daß** die Fehlersignal-Erzeugungseinrichtung (5-1 bis 5-N; 6-1 bis 6-N; 9) ein oder mehrere Flip-Flops umfaßt.

## Claims

1. Method for monitoring a process that is proceeding automatically to ensure that it is executed properly,
**characterized**
- **in that** one or more error signals (ERROR-1 to ERROR-N, ERROR-ALL) are generated at the beginning of the process to be monitored, each of which error signals is assigned to one or more stages of the process to be monitored, and each of which error signals signals the occurrence of an error in the assigned stage or in the assigned stages, and
- **in that** the generation of a respective error signal is ended if the error which is signalled by the relevant error signal has not occurred, it being assumed that the error whose presence is signalled by the relevant error signal has not occurred if the execution of that stage of the process to be monitored which is assigned to the relevant error signal has begun.

2. Method for monitoring a process that is proceeding automatically to ensure that it is executed properly,
**characterized**
- **in that** one or more error signals (ERROR-1 to ERROR-N, ERROR-ALL) are generated at the beginning of the process to be monitored, each of which error signals is assigned to one or more stages of the process to be monitored, and each of which error signals signals the occurrence of an error in the assigned stage or in the assigned stages, and
- **in that** the generation of a respective error signal is ended if the error which is signalled by the relevant error signal has not occurred, it being assumed that the error whose presence is signalled by the relevant error signal has not occurred if that stage of the process to be monitored which is assigned to the relevant error signal has been run through up to a specific point.

3. Method for monitoring a process that is proceeding automatically to ensure that it is executed properly,
**characterized**
- **in that** one or more error signals (ERROR-1 to ERROR-N, ERROR-ALL) are generated at the beginning of the process to be monitored, each of which error signals is assigned to one or more stages of the process to be monitored, and each of which error signals signals the occurrence of an error in the assigned stage or in the assigned stages, and
- **in that** the generation of a respective error signal is ended if the error which is signalled by the relevant error signal has not occurred, it being assumed that the error whose presence is signalled by the relevant error signal has not occurred if specific conditions are fulfilled during the execution of that stage of the process to be monitored which is assigned to the relevant error signal.

4. Method according to one of the preceding claims,
**characterized**
**in that** the error signal generating device (5-1 to 5-N; 6-1 to 6-N; 9) by means of which the error signals (ERROR-1 to ERROR-N, ERROR-ALL) are generated is prompted to generate the error signals by a signal (START PROGRAM, START ERASE) in response to which the process to be monitored is also started.

5. Method according to one of the preceding claims,
**characterized**
**in that** the error signal generating device (5-1 to 5-N; 6-1 to 6-N; 9) by means of which the error signals (ERROR-1 to ERROR-N, ERROR-ALL) are generated is prompted to end the generation of the error signals by control signals which are output by a control device (1), which controls the process to be monitored.

6. Method according to Claim 5,
**characterized**
**in that** the control signals are subjected to an AND function before being used for driving the error signal generating device (5-1 to 5-N; 6-1 to 6-N; 9).

7. Method according to one of the preceding claims,
**characterized**
**in that** a plurality or all of the error signals are subjected to an OR function and are thereby combined to form an error signal (ERROR-ALL) which is common to a plurality or all of the stages of the process to be monitored.

8. Method according to one of the preceding claims,
**characterized**
**in that** the process to be monitored is the programming and/or erasure of a flash memory.

9. Apparatus for monitoring a process that proceeds automatically to ensure that it is executed properly,
**characterized**
**in that** an error signal generating device (5-1 to 5-N; 6-1 to 6-N; 9) is provided, which is designed
- to generate one or more error signals (ERROR-1 to ERROR-N, ERROR-ALL) at the beginning of the process to be monitored, each of which error signals is assigned to one or more stages of the process to be monitored, and each of which error signals signals the occurrence of an error in the assigned stage or in the assigned stages, and
- to end the generation of a respective error signal if the error which is signalled by the relevant error signal has not occurred, it being assumed that the error whose presence is signalled by the relevant error signal has not occurred if the execution of that stage of the process to be monitored which is assigned to the relevant error signal has begun.

10. Apparatus for monitoring a process that proceeds automatically to ensure that it is executed properly,
**characterized**
**in that** an error signal generating device (5-1 to 5-N; 6-1 to 6-N; 9) is provided, which is designed
- to generate one or more error signals (ERROR-1 to ERROR-N, ERROR-ALL) at the beginning of the process to be monitored, each of which error signals is assigned to one or more stages of the process to be monitored, and each of which error signals signals the occurrence of an error in the assigned stage or in the assigned stages, and
- to end the generation of a respective error signal if the error which is signalled by the relevant error signal has not occurred, it being assumed that the error whose presence is signalled by the relevant error signal has not occurred if that stage of the process to be monitored which is assigned to the relevant error signal has been run through up to a specific point.

11. Apparatus for monitoring a process that proceeds automatically to ensure that it is executed properly,
**characterized**
**in that** an error signal generating device (5-1 to 5-N; 6-1 to 6-N; 9) is provided, which is designed
- to generate one or more error signals (ERROR-1 to ERROR-N, ERROR-ALL) at the beginning of the process to be monitored, each of which error signals is assigned to one or more stages of the process to be monitored, and each of which error signals signals the occurrence of an error in the assigned stage or in the assigned stages, and
- to end the generation of a respective error signal if the error which is signalled by the relevant error signal has not occurred, it being assumed that the error whose presence is signalled by the relevant error signal has not occurred if specific conditions are fulfilled during the execution of that stage of the process to be monitored which is assigned to the relevant error signal.

12. Apparatus according to one of Claims 9 to 11,
**characterized**
**in that** the error signal generating device (5-1 to 5-N; 6-1 to 6-N; 9) comprises one or more flip-flops.

## Revendications

1. Procédé de surveillance de l'exécution correcte d'un processus à déroulement automatique, **caractérisé en ce**
- **qu'**un ou plusieurs signaux d'erreur (ERROR-1 à ERROR-N, ERROR-ALL) sont générés au début du processus à surveiller auxquels sont associés chacun du ou des niveaux individuels du processus à surveiller, et qui signalent chacun l'occurrence d'une erreur dans le niveau associé ou dans les niveaux associés, et
- **que** la génération d'un signal d'erreur donné s'achève lorsque l'erreur qui est signalée par le signal d'erreur concerné n'est pas survenue, l'hypothèse étant ici que l'erreur dont la présence est signalée par le signal d'erreur concerné n'est pas survenue si l'exécution du niveau du processus à surveiller associé au signal d'erreur concerné a commencé.

2. Procédé de surveillance de l'exécution correcte d'un processus à déroulement automatique, **caractérisé en ce**
- **qu'**un ou plusieurs signaux d'erreur (ERROR-1 à ERROR-N, ERROR-ALL) sont générés au début du processus à surveiller auxquels sont associés chacun du ou des niveaux individuels du processus à surveiller, et qui signalent chacun l'occurrence d'une erreur dans le niveau associé ou dans les niveaux associés, et
- **que** la génération d'un signal d'erreur donné s'achève lorsque l'erreur qui est signalée par le signal d'erreur concerné n'est pas survenue, l'hypothèse étant ici que l'erreur dont la présence est signalée par le signal d'erreur concerné n'est pas survenue si le niveau du processus à surveiller associé au signal d'erreur concerné a été traversé jusqu'à un point donné.

3. Procédé de surveillance de l'exécution correcte d'un processus à déroulement automatique, **caractérisé en ce**
- **qu'**un ou plusieurs signaux d'erreur (ERROR-1 à ERROR-N, ERROR-ALL) sont générés au début du processus à surveiller auxquels sont associés chacun du ou des niveaux individuels du processus à surveiller, et qui signalent chacun l'occurrence d'une erreur dans le niveau associé ou dans les niveaux associés, et
- **que** la génération d'un signal d'erreur donné s'achève lorsque l'erreur qui est signalée par le signal d'erreur concerné n'est pas survenue, l'hypothèse étant ici que l'erreur dont la présence est signalée par le signal d'erreur concerné n'est pas survenue si certaines conditions étaient remplies lors de l'exécution du niveau du processus à surveiller associé au signal d'erreur concerné.

4. Procédé selon l'une des revendications précédentes, **caractérisé en ce que** le dispositif générateur de signal d'erreur (5-1 à 5-N ; 6-1 à 6-N ; 9), à l'aide duquel sont générés les signaux d'erreur (ERROR-1 à ERROR-N, ERROR-ALL), reçoit l'ordre de générer les signaux d'erreur par un signal (START PROGRAM, START ERASE) en réaction auquel le processus à surveiller est lancé.

5. Procédé selon l'une des revendications précédentes, **caractérisé en ce que** le dispositif générateur de signal d'erreur (5-1 à 5-N ; 6-1 à 6-N ; 9), à l'aide duquel sont générés les signaux d'erreur (ERROR-1 à ERROR-N, ERROR-ALL), reçoit l'ordre de mettre fin à la génération des signaux d'erreur part des signaux de commande qui sont délivrés par un dispositif de commande (1) qui commande le processus à surveiller.

6. Procédé selon la revendication 5, **caractérisé en ce que** les signaux de commande sont soumis à une combinaison logique ET avant d'être utilisés pour commander le dispositif générateur de signal d'erreur (5-1 à 5-N ; 6-1 à 6-N ; 9).

7. Procédé selon l'une des revendications précédentes, **caractérisé en ce que** plusieurs ou la totalité des signaux d'erreur sont soumis à une combinaison logique OU et sont ainsi regroupés en un signal d'erreur commun (ERROR-ALL) pour plusieurs ou la totalité des niveaux du processus à surveiller.

8. Procédé selon l'une des revendications précédentes, **caractérisé en ce que** le processus à surveiller est la programmation et/ou l'effacement d'une mémoire flash.

9. Dispositif de surveillance de l'exécution correcte d'un processus à déroulement automatique, **caractérisé en ce qu'**il est prévu un dispositif générateur de signal d'erreur (5-1 à 5-N ; 6-1 à 6-N ; 9) qui est conçu
- pour générer, au début du processus à surveiller, un ou plusieurs signaux d'erreur (ERROR-1 à ERROR-N, ERROR-ALL) auxquels sont associés chacun du ou des niveaux individuels du processus à surveiller, et qui signalent chacun l'occurrence d'une erreur dans le niveau associé ou dans les niveaux associés, et
- mettre fin à la génération d'un signal d'erreur donné lorsque l'erreur qui est signalée par le signal d'erreur concerné n'est pas survenue, l'hypothèse étant ici que l'erreur dont la présence est signalée par le signal d'erreur concerné n'est pas survenue si l'exécution du niveau du processus à surveiller associé au signal d'erreur concerné a commencé.

10. Dispositif de surveillance de l'exécution correcte d'un processus à déroulement automatique, **caractérisé en ce qu'**il est prévu un dispositif générateur de signal d'erreur (5-1 à 5-N ; 6-1 à 6-N ; 9) qui est conçu
- pour générer, au début du processus à surveiller, un ou plusieurs signaux d'erreur (ERROR-1 à ERROR-N, ERROR-ALL) auxquels sont associés chacun du ou des niveaux individuels du processus à surveiller, et qui signalent chacun l'occurrence d'une erreur dans le niveau associé ou dans les niveaux associés, et
- mettre fin à la génération d'un signal d'erreur donné lorsque l'erreur qui est signalée par le signal d'erreur concerné n'est pas survenue, l'hypothèse étant ici que l'erreur dont la présence est signalée par le signal d'erreur concerné n'est pas survenue si le niveau du processus à surveiller associé au signal d'erreur concerné a été traversé jusqu'à un point donné.

11. Dispositif de surveillance de l'exécution correcte d'un processus à déroulement automatique, **caractérisé en ce qu'**il est prévu un dispositif générateur de signal d'erreur (5-1 à 5-N ; 6-1 à 6-N ; 9) qui est conçu
- pour générer, au début du processus à surveiller, un ou plusieurs signaux d'erreur (ERROR-1 à ERROR-N, ERROR-ALL) auxquels sont associés chacun du ou des niveaux individuels du processus à surveiller, et qui signalent chacun l'occurrence d'une erreur dans le niveau associé ou dans les niveaux associés, et
- mettre fin à la génération d'un signal d'erreur donné lorsque l'erreur qui est signalée par le signal d'erreur concerné n'est pas survenue, l'hypothèse étant ici que l'erreur dont la présence est signalée par le signal d'erreur concerné n'est pas survenue si certaines conditions étaient remplies lors de l'exécution du niveau du processus à surveiller associé au signal d'erreur concerné.

12. Dispositif selon l'une des revendications 9 à 11, **caractérisé en ce que** le dispositif générateur de signal d'erreur (5-1 à 5-N ; 6-1 à 6-N ; 9) comprend une ou plusieurs bascules.
